Europäisches Patentamt

(19) European Patent Office

Office européen des brevets

(11) Publication number: **0 016 000**
**B1**

(12) **EUROPEAN PATENT SPECIFICATION**

(45) Date of publication of patent specification: **22.06.83**

(51) Int. Cl.³: **E 02 B 15/04, B 65 G 17/00**

(21) Application number: **79900547.5**

(22) Date of filing: **25.05.79**

(86) International application number:
**PCT/GB79/00085**

(87) International publication number:
**WO 79/01135 27.12.79 Gazette 79/27**

(54) SCAVENGING APPARATUS.

| (30) Priority: **26.05.78 GB 2367278**<br>**21.02.79 GB 7906163** | (73) Proprietor: **BYERS, Edward Victor**<br>**17 Cavendish Crescent North**<br>**The Park, Nottingham (GB)** |
| --- | --- |
| (43) Date of publication of application:<br>**01.10.80 Bulletin 80/20** | (72) Inventor: **BYERS, Edward Victor**<br>**17 Cavendish Crescent North**<br>**The Park, Nottingham (GB)** |
| (45) Publication of the grant of the patent:<br>**22.06.83 Bulletin 83/25** | |
| (84) Designated Contracting States:<br>**DE FR GB SE** | (74) Representative: **Bluff, John William et al,**<br>**c/o Lloyd Wise, Tregear & Co. Norman House**<br>**105-109 Strand**<br>**London, WC2R 0AE (GB)** |
| (56) References cited:<br>**CA - A - 943 871**<br>**CH - A - 541 039**<br>**FR - A - 2 074 050**<br>**FR - E - 78 495**<br>**GB - A - 1 183 067**<br>**US - A - 3 539 508**<br>**US - A - 3 968 041** | |

Courier Press, Leamington Spa, England

Scavenging apparatus

### Technical Field

This invention relates to scavenging apparatus for removing heavy oil from the surface zone of a body of water. The present invention finds particular utility is scavenging heavy, viscid oil.

### Background Art

Much attention has been given in recent times to the reduction of pollution from oil spillage at sea. Various methods have been proposed to deal with the serious pollution problems that arise when large quantities of oil are lost from tankers or other vessels. The oil tends to float in large slicks at or adjacent the surface of the sea.

One method of removing these oil slicks is by chemical dispersion, using chemicals to break up the oil. Such techniques are well known. They are expensive to perform and are often unsatisfactory with heavy, viscid oil which tends to become even more viscid under the weathering action at sea.

Other methods are primarily mechanical and numerous different techniques have been proposed, for example collecting oil with the aid of booms which is not practical for very large slicks. Another technique is to use a dredge type of endless bucket conveyor such as disclosed in Canadian Patent 943,871. Other devices have tried sweeping the oil into a collection zone by paddles or the like — see for example United States patents 3,656,624 and 3,623,609. Such devices are limited in their capacity and in their ability to deal satisfactorily with a mass of heavy viscid oil.

Further techniques employ the general concept of moving a disc structure, drums, cylinders, ropes or endless belts having an oleophilic surface through the surface zone of the water to accrete oil to the oleophilic surface from which it is removed for discharge into a suitable container or vessel. Examples of such devices are to be found in United States patents 4,172,036, 3,539,508 and 3,617,555 and Swiss patent 541,039. A combination of drum and endless belt both having an oleophilic surface is described in United States patent 3,968,041 (de Voss).

De Voss discloses a scavenging apparatus mounted to project forwardly of a support vessel. The apparatus has a sloping endless conveyor belt the far, lower, end of which dips into the water and the upper end of which is located inboard of the vessel to discharge into the vessel oil accreted to the belt as it rises from the sea. A drum is mounted above the far end of the conveyor to have its lower surface in the water at a position forward of the conveyor. Both the drum and conveyor have a surface of relatively soft flexible bristles or blades, specifically the artificial grass known under the name "Astroturf". The drum presses on the top of the oil slick, and is rotated such that the lower surface is moving in the same direction as the conveyor, namely toward the vessel. Some oil accretes to the drum surface and is removed by a squeegee roller to be deposited on the upwardly rising conveyor. Other oil is swept by the drum movement toward the conveyor where it breaks the surface and accretes to the conveyor to be carried inboard of the vessel.

While such apparatus may work satisfactorily with a light relatively mobile oil, it has the disadvantage of not being suitable for scavenging heavy viscid oil that tends to form lumpy masses particularly with weathering. Such oil does not readily accrete even to an oleophilic surface and cannot be satisfactorily dealt with by the various systems proposed heretofore.

The present invention is based on the concept of using rigid teeth that will have the ability to bite into such heavy oil. In addition there is provided means for the teeth to act against at a coaction zone where such means provides a reaction against the force exerted on the oil by the teeth to aid in ensuring that the teeth bite into the oil to draw it through the coaction zone for transport to a disposal point.

The invention is concerned with scavenging apparatus for removing heavy oil from a surface zone of a body of water, comprising a support structure floating at the surface of a body of water, first and second devices each movable about a respective predetermined path and positioned to provide a zone at or adjacent the waterline between respective portions of said paths for the acquisition of oil for delivery to a collection area, said devices being driven such that at said path portions they are moving in substantially the same direction. Such apparatus is known from the above-mentioned de Voss patent although the de Voss apparatus is not suited to scavenging heavy oil for the reasons already discussed.

For the scavenging of heavy oil, the apparatus of the invention is characterised in that said first device comprises rigid plate-like teeth arranged in rows in the direction of motion of said device with the plane of each tooth lying in the direction of motion, and wherein said path portions are closely adjacent to provide a reaction therebetween on viscid oil entering said zone to cause the teeth to bite into the oil, and that there is provided a scraper comb structure interleaved with said rows of teeth to aid in stripping the oil therefrom for delivery to said collection area.

Preferably, the second device also comprises rigid plate-like teeth arranged in rows in the direction of motion of the second device with the plane of each tooth lying in the direction of motion. Furthermore at the aforementioned zone, where the path portions of the first and second devices coact on the oil, the rows of teeth of the first and second devices are interleaved to engage viscid oil therebetween. The orientation of the teeth aids in an initial cutting or biting into the oil. With both devices toothed and the teeth interleaved at the coaction zone the reaction on the oil is high, each set of teeth aiding in adhering oil firmly onto the other set.

A scavenging apparatus to be more particularly described hereinafter uses a vessel as the support structure. The first device comprises an elongate conveyor system extending from a location outside the vessel to a location inboard of the vessel. The conveyor has an outer end portion below the water-line and an upwardly rising portion extending therefrom to rise through the surface zone of the water and upwardly toward the inboard location. The conveyor comprises an endless belt from which the plate-like rigid teeth project. The scraper comb structure is located at the upper end portion of the belt to remove oil adhering to the teeth for collection in the vessel. In this apparatus the second device is preferably a rotary structure mounted above the conveyor to provide the coaction zone at or adjacent the waterline. The rotary structure may be relatively smooth or toothed as already discussed, e.g. by using a smooth drum or a set of toothed discs, respectively, rotating about a horizontal axis transverse to the conveyor.

The rotary structure may be carried on an axle about which it rotates. The axle is carried by a support arrangement which may include means allowing displacement of the axle toward and away from the conveyor and preferably including means resiliently biasing the axle toward the conveyor. This enables displacement of the rotary structure from the conveyor to allow passage through the coaction zone of larger pieces of debris picked up by the scavenging apparatus.

In the apparatus to be described, the second device, whether toothed or not, is preferably provided with a scraper means to remove oil adhering to the device and deposit it into the conveyor belt at a position downstream of the coaction zone, that is after the zone in the direction of conveyor motion. A preferred structure for the conveyor belt is to make it of pivotally linked slats each having a lateral row of teeth secured thereto. The slats may have oleophilic outer surfaces to aid in accreting and adhering oil to the conveyor.

In a modification of the apparatus of the invention the first, toothed, device comprises a rotary structure from which the teeth project radially outwardly. The second device is a conveyor system, for example having a smooth or a ribbed surface. The conveyor system is otherwise arranged as already explained to deliver material into a vessel and the rotary structure is mounted for rotation about a horizontal axis extending transversely of and above said conveyor system to provide the coaction zone. The scraper comb is located to remove oil adhering to the teeth of the rotary structure and deposit is at a point downstream of the coaction zone for delivery by the conveyor into the vessel. Means is preferably provided to aid in removing oil from the conveyor at the location inboard of the vessel.

The invention, features of whose practice have been discussed above, will now be further described with reference to the accompanying drawings.

Brief Description of Drawings

Figure 1 shows in a simplified side elevation a preferred embodiment of the invention employing a toothed conveyor cooperating with a toothed disc structure:

Figure 2 is a fragmentary plan view of a portion of the conveyor and of the form of a scraper comb structure usable therewith;

Figure 3 is a diagrammatic side view, partly in section, showing the general arrangements for mounting the apparatus of Figure 4 on a vessel and for storing the scavenged oil; and

Figures 4 and 5 show in side elevation modifications of the apparatus of Figure 1.

When oil is freshly discharged at sea it usually contains a proportion of volatile constituents which tend to evaporate owing to exposure to the air and the stirring action resulting from the motion of the sea. The effect continues until the density of the oil causes it to sink lower and lower until it is only just floating with resulting reduction in area exposed to the evaporative influence of the atmosphere. It also becomes much more viscous and resistant to penetration. Certain types become so viscid that they could more properly be regarded as gels rather than liquids.

The Preferred Embodiment

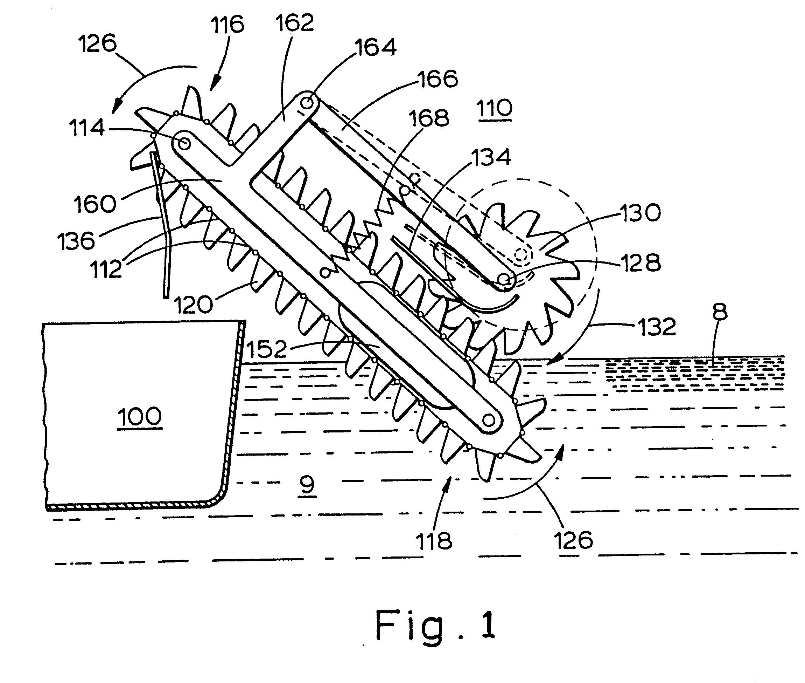

For heavier oils, particularly those which have become highly viscid and lumpy, due to weathering or other treatment the embodiment of the invention shown in Figs. 1 to 3 may be used.

Fig. 1 shows a conveyor arrangement 110 carried by and projecting forwardly from the bow of a vessel 100. The conveyor arrangement 110 dips into the sea 9 and is being advanced into an oil slick 8 floating at the surface. The support framework for the conveyor arrangement is not shown in Fig. 1.

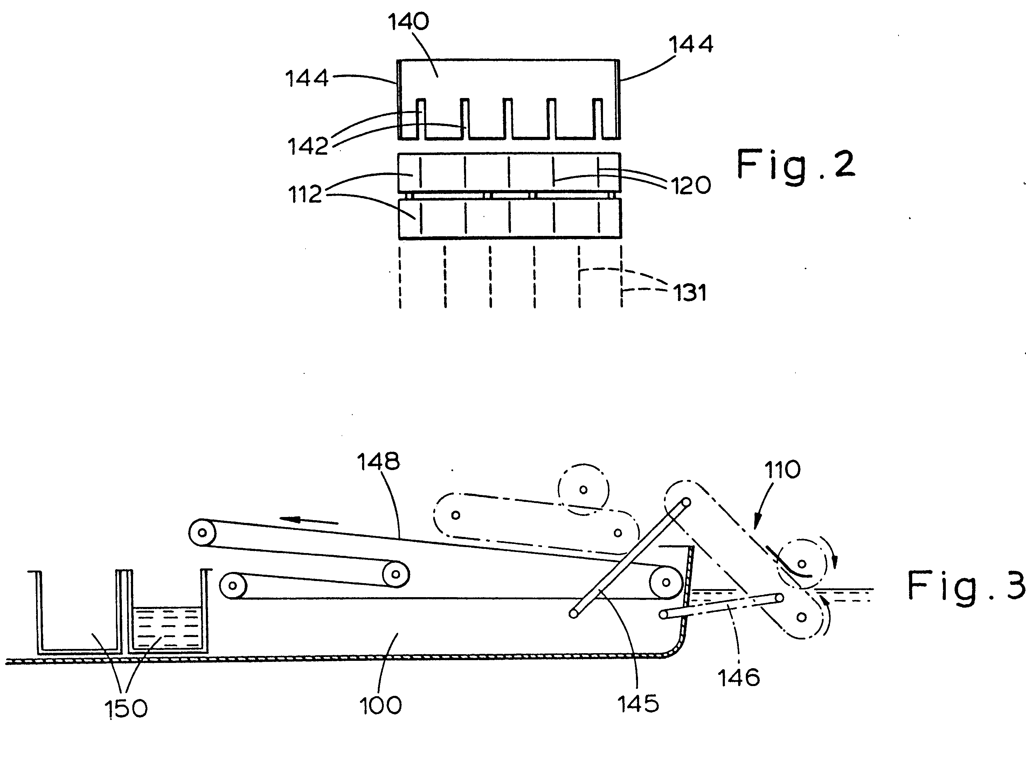

The conveyor arrangement comprises an endless belt made up of pivotally-linked slats 112 which are driven around end axles 114 by sprocket wheels (not shown). One end 116 of the conveyor is supported above the bow section of the vessel, the conveyor extending forwardly and downwardly with its lower end 118 in the sea. Each slat 112 carries a lateral row of teeth 120 (better seen in Fig. 2) each having an upright forward edge in the direction of motion and a sloping trailing edge. The direction of motion is indicated by arrows 126 and the lower end 118 is positioned so that the teeth rise into the oil and carry the accreted oil along the upper side of the conveyor for discharge into the vessel. Fig. 2 shows two of the slats 112, each slat bearing the same number of teeth 120 with the teeth equi-positioned on each slat so as to form longitudinal rows along the conveyor.

Mounted above the lower end of the conveyor is an axle 128 carrying a plurality of parallel, spaced peripherally-toothed discs 130. The toothed discs are interleaved with the longitudinal rows of conveyor teeth, i.e. lie in planes indicated by the dashed lines 131 in Figure 2 relative to the conveyor slats 112 shown in that figure. The rows of conveyor and disc teeth interleave substantially at the surface of the sea and coact to provide a mutual reaction on the oil so as to engage and draw in heavy, sticky patches of oil. To this end the discs 130 are rotated as indicated by arrow 132 and move in the direction of the conveyor teeth at the arc of interleaving. Oil clinging on the toothed discs is removed by a close fitting comb device 134, which strips the oil as the teeth enter the interleaving zone and which is extended parallel to the conveyor to assist in guiding this oil onto the upward portion of the conveyor. Both the conveyor and toothed discs are conveniently driven from means within the recovery vessel using chain and sprocket drives.

To meet the problem of a piece of flotsam being gathered from the water by the toothed conveyor, the toothed discs are mounted on spring-loaded arms so that the disc can swing away from the conveyor belt when high resistance due to a piece of flotsam is encountered.

Referring again to Fig. 1, the conveyor arrangement includes longitudinal struts 160 (one of which is seen) between which the axles 114 are supported. These struts carry extensions 162 to which is pivotally mounted at 164 ends of respective arms 166 whose opposite ends support between them the axle 128 of the toothed discs, the axle extending horizontally and transversely of the conveyor. The arms 166 are biased to urge the discs 130 towards the conveyor by springs 168 shown diagrammatically as tension springs acting between the arms 166 and the struts 160.

Fig. 1 illustrates the normal operating position of the toothed disc assembly in full line, the dashed line indicating how it can swing away from the conveyor when necessary.

At the upper end of the conveyor the oil is stripped from the teeth, as they begin their downward descent, by another comb device 136, and is discharged into the vessel. Fig. 2 illustrates a comb structure 140 in general form having openings 142 which provide a narrow clearance for the teeth to be stripped by the comb. Structure 140 is of general form: the specific comb devices 134 and 136 are shaped for the function and guidance required. The structure may be provided with flanges at the side edges 144 to contain the oil in the wanted guidance path. It will be seen that as applied to the comb device 136, the structure will enable the removal of excess oil collected between the teeth of the conveyor slats as well as stripping oil from the teeth.

The mounting of the conveyor arrangement 110 to the vessel is indicated in Fig. 3 where it is mounted by means of hydraulic ram-type lever arms 145, 146 whereby the whole assembly can be swung from the operative position (full line) to an inboard stowed position (dashed line). The oil removed from the toothed conveyor belt is discharged onto an extendable conveyor belt 148 that is positioned to convey the oil to a selected one of a group of storage tanks 150 carried amidships. To assist in maintaining the correct positioning of the lower end of the conveyor arrangement relative to the moving surface of the sea, the interior of the conveyor arrangement is provided with a sealed buoyancy chamber 152 at the lower end portion (Fig. 1).

It is contemplated that the conveyor arrangement could be made as wide as or wider than the recovery vessel. In this case it would be necessary to shape the comb device 136 and any passageways leading from it to discharge oil onto the narrower conveyor belt 148.

The surfaces of the teeth of conveyor arrangement 110 and the discs are oleophilic. The conveyor teeth are relatively thin though of substantial depth in the direction of motion to provide a good surface area for the adhesion of oil. A tooth height of 8 cms has been found suitable with the lateral and longitudinal spacings between adjacent teeth of about 5 cms. The conveyor slats can have their outer surfaces to which the teeth are mounted also of oleophilic material, e.g. slightly rusted steel, to promote the oil lifting power of the conveyor belt. It is contemplated that the apparatus employing the toothed conveyor belt of Figs. 1 to 4 is particularly suited to scavenging heavier oils of SAE 200 upwards to heavily weathered oil.

In the apparatus of Figs. 1 to 3, the conveyor and disc teeth interleave at or a little above the sea surface. The teeth react together to penetrate the oil and with the aid of the comb 134 deposit it onto the upwardly rising conveyor. The conveyor is preferably driven at a speed in excess of the peripheral speed of the disc teeth to aid in removing the gathered oil from the interleaving area.

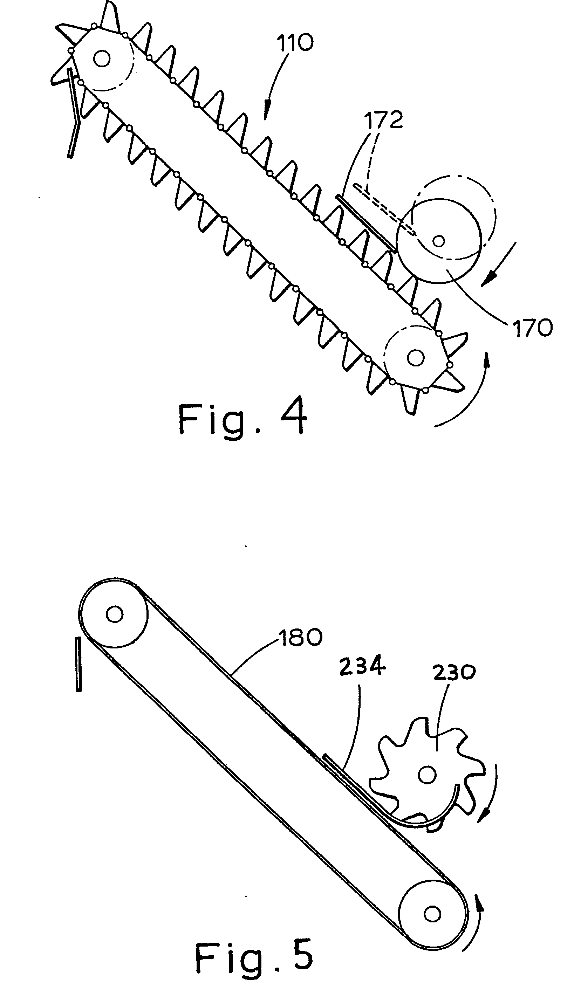

While the above described embodiment is preferred, simpler versions may also be employed and these are illustrated in Figs. 4 and 5 where only the points of distinction are illustrated.

Fig. 4 shows the conveyor arrangement 110 in which the toothed discs are replaced by a plain roller 170 or by a set of plain discs. The latter have the advantage of interleaving with the conveyor teeth to react with these teeth and cause the oil to adhere thereto. The plain roller is provided with a cooperating doctor blade 172 to strip oil from the roller and deposit it on the conveyor. The plain disc would have the comb 134. The roller, like the toothed discs, is preferably spring biased to be movable away from the conveyor as indicated by the dashed line. The roller assists in ensuring that the oil is fixed on to the conveyor for upward delivery.

Fig. 5 shows the use of a smooth conveyor 180 cooperating with toothed discs 230 of the kind described with reference to Fig. 1. The conveyor surface is oleophilic and the oil accreted or tending to accrete thereto is penetrated by the disc teeth to affix to the conveyor with the aid of comb 234 for upward delivery. Rather than an entirely smooth belt, it may be corrugated to increase adhesion.

The comb structure 134 used with the rotating discs 130 of Fig. 4 is preferably shaped so as to be nowhere locally tangential to the surface of a disc. This ensures a scraping action at every point. Normally the various comb structures described will be made of metal. They may be mounted for vibration in order to assist stripping of the oil. The oil recovered forms a stiff sludge which may be difficult to pump. It may be desirable to mix a diluent with the oil: used auto engine oil is suitable.

Oleophilic surfaces for the conveyor slats and teeth are readily obtainable because any dry substance which is insoluble in water becomes strongly repellent to the water once it has been wetted with oil. Polyethylene and polypropylene are excellent materials owing to their natural hydrophobic nature and can be used in solid form or as coatings on metal substances. However, where a rigid material is required, dry and slightly rusted steel which has been wetted with oil is quite satisfactory.

## Claims

1. Scavenging apparatus for removing heavy oil (8) from a surface zone of a body of water (9), comprising a support structure floating at the surface of a body of water, first (110, 230) and second (130, 180) devices each movable about a respective predetermined path and positioned to provide a zone at or adjacent the waterline between respective portions of said paths for the acquisition of oil for delivery to a collection area, said devices being driven such that at said path portions they are moving in substantially the same direction. wherein said first device (110, 230) comprises rigid plate-like teeth (120) arranged in rows in the direction of motion of said first device with the plane of each tooth lying in the direction of motion, and wherein said path portions are closely adjacent to provide a reaction therebetween on viscid oil entering said zone to cause the teeth (120) to bite into the oil, and wherein there is provided a scraper comb structure (136, 234) interleaved with said rows of teeth to aid in stripping the oil therefrom for delivery to said collection area.

2. Scavenging apparatus as claimed in Claim 1 wherein said second device (130) comprises rigid plate-like teeth arranged in rows in the direction of motion of said second device with the plane of each tooth lying in the direction of motion, and wherein at said zone said rows of teeth of said first and second devices (118 and 130) are interleaved to engage viscid oil therebetween.

3. Scavenging apparatus as claimed in Claim 1 or 2 in which the support structure is a vessel (100) and the first device comprises an elongate conveyor system (110) extending from a location outside the vessel to a location inboard of the vessel, said conveyor system having an outer end portion (118) below the waterline and an upwardly rising portion extending therefrom to rise through the surface zone of the water (9) and upwardly toward the inboard location, wherein said conveyor comprises an endless belt having said teeth (120) of the first device (110) projecting therefrom, and wherein said scraper comb structure (136) is located at the upper end portion (116) of said conveyor belt.

4. Scavenging apparatus as claimed in Claim 3 in which said second device comprises a rotary structure (130, 170) mounted above said conveyor.

5. Scavenging apparatus as claimed in Claim 4 further comprising scraper means (134, 172) co-operating with said rotary structure (130, 170) to remove material adhering thereto and deposit same onto said conveyor belt at a position downstream of said zone.

6. Scavenging apparatus as claimed in Claim 4 or 5 wherein said rotary structure (130) is carried on an axle (128) which extends transversely of said conveyor belt and about the axis of which said rotary structure rotates and comprising a support arrangement (162, 166) carrying said axle and including means (164) allowing displacement of said axle toward and away from said conveyor system.

7. Scavenging apparatus as claimed in Claim 6 in which said support arrangement includes resilient means (168) biasing said axle toward said conveyor system.

8. Scavenging apparatus as claimed in any one of Claims 3 to 7, wherein said conveyor belt comprises a plurality of pivotally linked transverse slats (112) each of which has a lateral row of teeth (120) secured thereto.

9. Scavenging apparatus as claimed in Claim 8 in which said slats have oleophilic outer surfaces.

10. Scavenging apparatus as claimed in Claim 1 in which said support structure is a vessel (100) and said second device comprises an elongate conveyor system (180) extending from a location outside the vessel to a location inboard of the vessel, said conveyor system having an outer end portion (118) below the waterline and an upwardly rising portion extending therefrom to rise through the surface zone of the water (9) and upwardly toward the inboard location, wherein said first device comprises a rotary structure (230) supported for rotation about a horizontal axis extending transversely of and above said conveyor system to provide said zone at or adjacent the waterline, said teeth projecting radially outwardly of said rotary structure, and wherein said scraper comb (234) is located to deposit material removed from said teeth onto said conveyor at a point downstream of said zone for delivery by said conveyor system to said inboard location.

11. Scavenging apparatus as claimed in any one of Claims 4 to 7 or 10 in which said conveyor is operable to move at a speed greater than the peripheral speed of said rotary structure.

### Revendications

1. Appareil de reprise servant à évacuer de l'huile lourde (8) d'une zone superficielle d'une masse d'eau (9), comprenant une structure de support flottant à la surface d'une masse d'eau, un premier (110, 230) et un second (130, 180) dispositif mobiles chacun suivant un trajet prédeterminé correspondant et positionnés de manière à présenter une zone au niveau de l'interface d'eau entre des parties correspondantes des trajets ou près de celles-ci pour la prise d'huile à transférer à une zone collectrice, les dispositifs étant entraînes d'une manière telle qu'au niveau des dites parties de leurs trajets, ils se déplacent en substance dans le même sens, caractérisé en ce que le premier dispositif (110, 230) comprend des dents rigides de forme plate (120) disposées en rangées dans la direction du mouvement du premier dispositif, le plan de chaque dent étant disposé dans la direction du mouvement et les dites parties des trajets sont étroitement adjacentes pour provoquer entre elles une réaction sur l'huile visqueuse pénétrant dans la zone afin d'amener les dents (120) à mordre dans l'huile, et une structure formant peigne de râclage (136, 234) est prévue et est imbriquée avec les rangées de dents pour contribuer à râcler l'huile des dents en vue de son transfert vers la zone collectrice.

2. Appareil de reprise suivant la revendication 1, caractérisé en ce que le second dispositif (130) comprend des dents rigides de forme plate disposés en rangées dans la direction de mouvement du second dispositif, le plan de chaque dent étant disposé dans la direction du mouvement et, au niveau de la dite zone, les rangées de dents du premier et du second dispositif (118 et 130) sont imbriquées afin d'attaquer de l'huile visqueuse entre elles.

3. Appareil de reprise suivant la revendication 1 ou 2, caractérisé en ce que la structure de support est un bateau (100) et le premier dispositif comprend un long système de transporteur (110) allant d'un endroit situé à l'extérieur du bateau à un endroit situé à l'intérieur de ce bateau, le système de transporteur comportant une partie d'extrémité externe (118) située en dessous de l'interface d'eau et une partie qui s'étend vers le haut et qui part de cette partie d'extrémité vers le haut à travers la zone superficielle de l'eau (9) et vers le haut vers l'endroit intérieur, le transporteur comprenant une bande sans fins sur laquelle les dents (120) du premier dispositif (110) font saillie et la peigne de râclage (136) est placé au niveau de la partie d'extrémité supérieure (116) de la bande transporteuse.

4. Appareil de reprise suivant la revendication 3, caractérisé en ce que le second dispositif comprend une structure rotative (130, 170) montée au-dessus du transporteur.

5. Appareil de reprise suivant la revendication 4, caractérisé en ce qu'il comprend, en outre, un dispositif de râclage (134, 172) coopérant avec la structure rotative (130, 170) pour éliminer la matière qui y adhère et la déposer sur la bande transporteuse en un endroit situé en aval de la zone.

6. Appareil de reprise suivant la revendication 4 ou 5, caractérisé en ce que la structure rotative (130) est montée sur un pivot (128) qui s'étend transversalement à la bande transporteuse et autour de l'axe duquel la structure rotative tourne et comprenant un dispositif de support (162, 166) portant le pivot et comprenant des moyens (164) permettant au pivot de se rapprocher et de s'écarter du système de transporteur.

7. Appareil de reprise suivant la revendication 6, caractérisé en ce que le dispositif de support comprend des moyens élastiques (168) sollicitant le pivot vers le système de transporteur.

8. Appareil de reprise suivant l'une quelconque des revendications 3 à 7, caractérisé en ce que la bande transporteuse comprend plusieurs lattes transversales articulées les unes aux autres (112) qui comportent chacune une rangée latérale de dents (120) qui y sont fixées.

9. Appareil de reprise suivant la revendication 8, caractérisé en ce que les lattes comportent des surfaces extérieures oléophiles.

10. Appareil de reprise suivant la revendication 1, caractérisé en ce que la structure de support est un bateau (110) et le second dispositif comprend un long système de transporteur (180) allant d'un endroit situé à l'extérieur du bateau vers un endroit situé à l'intérieur de ce bateau, le système de transporteur comportant une partie d'extrémité externe (118) située en dessous de l'interface d'eau et une partie inclinée vers le haut qui part de cette partie d'extrémité et s'élève à travers la zone superficielle de l'eau (9) pour se prolonger vers le haut vers l'endroit interieur, le premier dispositif comprenant une structure rotative (230) montée de manière à tourner autour d'un axe horizontal s'étendant transversalement au système transporteur et au-dessus de celui-ci afin de former la zone située au niveau de l'interface d'eau ou près de celle-ci, les dents s'étendant radialement vers l'extérieur de la structure rotative et le peigne de râclage (234) est placé de manière à déposer de la matière enlevée des dents sur le transporteur en un point situé en aval de la zone en vue de la transférer au moyen du système de transporteur vers l'endroit intérieur.

11. Appareil de reprise suivant l'une quelconque des revendications 4 à 7 ou 10, caractérisé en ce que le transporteur peut être mis en oeuvre de manière à se déplacer à une vitesse supérieure à la vitesse périphérique de la structure rotative.

**Patentansprüche**

1. Räumgerät zur Entfernung von Schweröl (8) von einer Gewässeroberflächenzone (9) bestehend aus einer auf der Gewässeroberfläche schwimmenden Trägerkonstruktion sowie ersten (110, 230) und zweiten (130, 180) Vorrichtungen, die jeweils auf einer vorbestimmten Umlaufbahn beweglich und so angeordnet sind, dass sich an oder nahe der Wasserlinie zwischen entsprechenden Abschnitten dieser Bahnen eine Zone zum Aufnehmen des Oels zwecks dessen Förderung zu einer Sammelstelle bildet, wobei diese Vorrichtungen so angetrieben werden, dass sie sich in diesen Bahnabschnitten in im wesentlichen gleicher Richtung bewegen, worin diese erste Vorrichtung (110, 230) starre plattenartige, reihenweise in deren Bewegungsrichtung angeordnete Zähne (120) aufweist, wobei die Zahnebene jeweils in der Bewegungsrichtung liegt, und worin diese Bahnabschnitte nahe beieinander leigen, um dazwischen eine Wirkung auf in diese zone eintretendes dickflüssiges Oel auszuüben, damit die Zähne (120) in das Oel eindringen, und worin eine mit diesen Zahnreihen ineinandergreifende Abschabkammkonstruktion (136, 234) vorgesehen ist, um das Abstreifen des Oels von den Zähnen zwecks dessen Förderung zu jener Sammelstelle zu unterstützen.

2. Räumgerät nach Anspruch 1, worin diese zweite Vorrichtung (130) starre plattenartige, reihenweise in deren Bewegungsrichtung angeordnete Zähne aufweist, wobei die Zahnebene jeweils in der Bewegungsrichtung liegt, und worin diese Zahnreihen jener ersten und zweiten Vorrichtungen (118 und 130) in besagter Zone ineinandergreifen, um das dickflüssige Oel zwischen sich zu erfassen.

3. Räumgerät nach Anspruch 1 oder 2, bei dem die Trägerkonstruktion ein Schiff (100) ist und die erste Vorrichtung aus einem sich von einer Stelle ausserhalb des Schiffs zu einer Stelle an Bord des Schiffs erstreckenden länglichen Fördersystem (110) besteht, wobei dieses Fördersystem einen äusseren Endteil (118) unterhalb der Wasserlinie und einen von da aufwärts verlaufenden, ansteigenden Teil aufweist, der durch die Oberflächenzone des Wassers (9) und nach oben zu der Stelle an Bord hin ansteigt, worin dieser Förderer aus einem diese davon vorstehenden Zähne (120) der ersten Vorrichtung (110) tragenden endlosen Band besteht, und worin diese Abschabkammkonstruktion (136) am oberen Endteil (116) dieses Förderbands angeordnet ist.

4. Räumgerät nach Anspruch 3, worin diese zweite Vorrichtung eine oberhalb dieses Förderers gelagerte Drehkonstruktion (130, 170) umfasst.

5. Räumgerät nach Anspruch 4, welches ferner mit dieser Drehkonstruktion (130, 170) zusammenarbeitende Abschabmittel (134, 172) zur Entfernung daran anhaftenden Materials und dessen Ablage auf jenem Förderband an einer dieser Zone nachgeordneten Stelle umfasst.

6. Räumgerät nach Anspruch 4 oder 5, worin diese Drehkonstruktion (130) auf einer Welle (128) gelagert ist, die sich quer zu diesem Förderband erstreckt und um deren Achse diese Drehkonstruktion rotiert, und eine Stützeinrichtung (162, 166) umfasst, welche diese Welle trägt und eine Verschiebung dieser Welle zu diesem Fördersystem hin und von diesem hinweg gestattende Mittel (164) einschliesst.

7. Räumgerät nach Anspruch 6, worin diese Stützeinrichtung Federmittel (168) einschliesst, welche diese Welle gegen dieses Fördersystem hin vorspannen.

8. Räumgerät nach einem der Ansprüche 3 bis 7, worin dieses Förderband eine Mehrzahl gelenkig verbundener Querlatten (112) aufweist, an denen jeweils seitliche Reihen Zähne (120) befestigt sind.

9. Räumgerät nach Anspruch 8, worin diese Lattern oleophile Aussenflächen aufweisen.

10. Räumgerät nach Anspruch 1, bei dem diese Trägerkonstruktion eine Schiff (100) ist und diese zweite Vorrichtung aus einem sich von einer Stelle ausserhalb des Schiffs zu einer Stelle an Bord des Schiffs erstreckenden länglichen Fördersystem (180) besteht, wobei dieses Fördersystem eine äusseren Endteil (118) unterhalb der Wasserlinie und einen von da aufwärts verlaufenden, ansteigenden Teil aufweist, der durch die Oberflächenzone des Wassers (9) und nach oben zu der Stelle an Bord hin ansteigt, worin diese erste Vorrichtung eine um eine horizontale, über diesem Fördersystem und quer dazu verlaufende Achse drehbar abgestützte Drehkonstruktion (230) umfasst, um diese Zone an oder nahe der Wasserlinie zu bilden, wobei jene Zähne radial auswärts von dieser Drehkonstruktion vorstehen, und worin dieser Abschabkamm (234) so angeordnet ist, dass er von diesen Zähnen entferntes Material auf diesem Förderer an einer dieser Zone nachgeordneten Stelle zur Förderung durch dieses Fördersystem zu jener Stelle an Bord ablegt.

11. Räumgerät nach einem der Ansprüche 4 bis 7 oder 10, worin dieser Förderer mit einer höheren Bewegungsgeschwindigkeit als der Umfangsgeschwindigkeit dieser Drehkonstruktion betrieben werden kann.

Fig. 1

Fig.2

Fig.3

110

172

170

Fig. 4

180

234

230

Fig. 5